# EUROPEAN PATENT APPLICATION

(11) **EP 3 057 006 A1**
(43) Date of publication of application: **17.08.2016**
(21) Application number: 15196172.9
(22) Date of filing: 25.11.2015
(51) Int. Cl.: G06F 17/30

(54) **METHOD AND DEVICE OF FILTERING ADDRESS**

(30) Priority: 13.02.2015 CN 201510079200
(71) Applicant: Xiaomi Inc., Beijing 100085 (CN)
(72) Inventor: FAN, Jinsong, 100085 BEIJING (CN); YU, Yifei, 100085 BEIJING (CN); ZUO, Jinglong, 100085 BEIJING (CN)
(74) Representative: Fontenelle, Sandrine

(57) **Abstract**

The present invention relates to a method and device for filtering an address, belonging to the technical field of Internet. The method includes: acquiring (201) a Uniform Resource Locator URL address corresponding to a material resource of a webpage, the material resource of the webpage including at least one of a picture resource, an audio resource, a video resource and a literal resource; searching (202) whether the URL address is stored in an address caching list, the address caching list being for storing URL addresses having been matched by a predefined matching algorithm; and if the URL address is not stored in the address caching list, performing (203) a matching operation to the URL address according to the predefined matching algorithm to determine whether the URL address is a URL address needing to be filtered.

## Description

### TECHNICAL FIELD

The present invention relates to the technical field of Internet and, more particularly, to a method and a device for filtering an address.

### BACKGROUND

The advertising resources displayed on the webpage not only affect the browsing experience of the user, but also waste data usage of the user.

In the related art, in order to filter the advertising resources, a filter matching table is firstly built by a predefined matching algorithm, and then a matching operation is performed to a URL (Uniform Resource Locator) address corresponding to a material resource of a webpage according to at least one regular expression in the filtering match table. If the matching is successful, it is determined that the URL address is an advertisement address needing to be filtered and then the URL address is filtered. Since the URL addresses corresponding to the same advertising resource on the same webpage are generally the same, when receiving the same two URL addresses, it is necessary to perform the same two matching operations by using the predefined matching algorithm, which not only affects the filtering efficiency, but also wastes the calculating resource.

### SUMMARY

The embodiments of the present invention provide a method and a device for filtering an address. The technical solutions are as follows.

According to a first aspect of embodiments of the present invention, there is provided a method of filtering an address, including:
acquiring a URL address corresponding to a material resource of a webpage, the material resource of the webpage including at least one of a picture resource, an audio resource, a video resource and a literal resource;
searching whether the URL address is stored in an address caching list, the address caching list being for storing URL addresses having been matched by a predefined matching algorithm; and
if the URL address is not stored in the address caching list, performing a matching operation to the URL address according to the predefined matching algorithm to determine whether the URL address is a URL address needing to be filtered.

According to a second aspect of embodiments of the present invention, there is provided a device for filtering an address, including:
a first acquisition module configured to acquire a URL address corresponding to a material resource of a webpage, the material resource of the webpage including at least one of a picture resource, an audio resource, a video resource and a literal resource;
a search module configured to search whether the URL address is stored in an address caching list, the address caching list being for storing URL addresses having been matched by a predefined matching algorithm; and
a matching module configured to, if the URL address is not stored in the address caching list, perform a matching operation to the URL address according to the predefined matching algorithm to determine whether the URL address is a URL address needing to be filtered.

In an embodiment, the address caching list comprises a second caching list for storing URL addresses which are determined to need no filtering by the matching operation according to the predefined matching algorithm, and the device further comprises:
a first sending module configured to, if the URL address is detected to be a URL address needing no filtering by the matching operation according to the predefined matching algorithm, send a request of acquiring a webpage material resource to a webpage resource server according to the URL address; and
a second adding module configured to add this URL address into the second caching list.

In an embodiment:
the address caching list comprises a first caching list for storing URL addresses which are determined to need filtering by the matching operation according to the predefined matching algorithm, and a second caching list for storing URL addresses which are determined to need no filtering by the matching operation according to the predefined matching algorithm,
the search module comprises:
   a first detection submodule configured to detect whether the first caching list stores the URL address; and
   a second detection submodule configured to, if the first caching list does not store the URL address, detect whether the second caching list stores the URL address;
the second detection submodule being also configured to, if the second caching list does not store the URL address, perform the matching operation to the URL address according to the predefined matching algorithm to determine whether the URL address is the URL address needing filtering,
and the device further comprises:
   a second filtering module configured to, if the URL address is determined to be a URL address needing filtering according to the predefined matching algorithm, filter the URL address, and add the URL address into the first caching list; and
   a second sending module configured to, if the URL address is determined to be a URL address needing no filtering according to the predefined matching algorithm, send a request of acquiring a webpage material resource to a webpage resource server according to the URL address, and add the URL address into the second caching list.

In an embodiment, the device further comprises:
a list sending module configured to send an address caching list to a server, the server being for analyzing an accessing habit of a client terminal according to the address caching list, and generating update information according to the accessing habit of the client terminal and the address caching lists sent by other client terminals; and
a receiving module configured to receive the update information and update the address caching list according to the update information.

In an embodiment, the device further comprises a third filtering module configured to, if the address caching list stores the URL address therein, directly filter the URL address according to records in the address caching list; or send a request of acquiring a webpage material resource to a webpage resource server according to the URL address.

According to a third aspect of embodiments of the present invention, there is provided a device for filtering an address, including:
a processor; and
a memory for storing instructions executable by the processor;
wherein the processor is configured to:
   acquire a URL address corresponding to a material resource of a webpage, the material resource of the webpage including at least one of a picture resource, an audio resource, a video resource and a literal resource;
   search whether the URL address is stored in an address caching list, the address caching list being for storing URL addresses having been matched by a predefined matching algorithm; and
   if the URL address is not stored in the address caching list, perform a matching operation to the URL address according to the predefined matching algorithm to determine whether the URL address is a URL address needing to be filtered.

The present invention also provides a computer program, which when executed on a processor of an electronic device, performs the above method.

The technical solutions provided by embodiments of the present invention may include the following advantageous effects:
by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm. Thereby the filtering efficiency is improved, and the calculating resource is saved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an environmental schematic diagram of an implementation environment involved by respective embodiments of the present invention;
Fig. 2A is a method flow chart of a method of filtering an address, according to one exemplary embodiment of the present invention;
Fig. 2B is a method flow chart of a method of filtering an address, according to one exemplary embodiment of the present invention;
Fig. 2C is a method flow chart of a method of filtering an address, according to one exemplary embodiment of the present invention;
Fig. 2D is a method flow chart of a method of filtering an address, according to one exemplary embodiment of the present invention;
Fig. 3A is a method flow chart of a method of filtering an address, according to another exemplary embodiment of the present invention;
Fig. 3B is a method flow chart of a process for acquiring a URL address involved by the method of filtering an address, according to another exemplary embodiment of the present invention;
Fig. 4 is a method flow chart of a method of filtering an address, according to further another exemplary embodiment of the present invention;
Fig. 5 is a method flow chart of a method of filtering an address, according to still another exemplary embodiment of the present invention;
Fig. 6 is a structural block diagram of a device for filtering an address, according to one exemplary embodiment of the present invention;
Fig. 7 is a structural block diagram of a device for filtering an address, according to another exemplary embodiment of the present invention; and
Fig. 8 is a block diagram of a device for filtering an address, according to one exemplary embodiment of the present invention.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

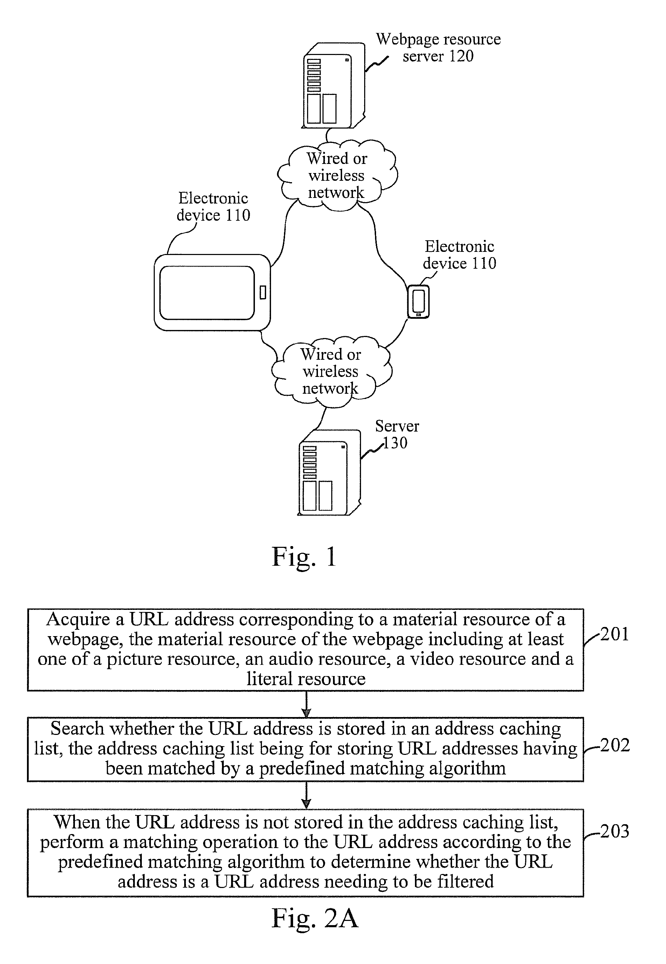

Fig. 1 is an environmental schematic diagram of an implementation environment involved by respective embodiments of the present invention. The implementation environment includes an electronic device 110, a webpage resource server 120 and a server 130.

The electronic device 110 may be implemented by an electronic device installed with a webpage browser client terminal. The electronic device may be a smartphone, a tablet, an e-book reader, a portable laptop computer (camera, video camera), and the like.

The electronic device 110 is connected with the webpage resource server 120 via a wired or wireless network.

The webpage resource server 120 may be one server, or a server cluster consisting of several servers, or a cloud computing service center. The webpage resource server 120 is used for returning a corresponding webpage code according to a webpage accessing request sent by the electronic device 110, and returning corresponding webpage material according to a request of acquiring webpage material resource sent by the electronic device 110.

The server 130 is connected with the electronic device 110 via a wired or wireless network.

The server 130 may be one server, or a server cluster consisting of several servers, or a cloud computing service center. The server 130 is used for receiving address caching lists sent by a plurality of electronic devices 110.

In order to simplify the description, hereinafter, only a method of filtering an address being performing by the client terminal is exemplified, but the present invention is not limited thereto.

Fig. 2A is a method flow chart of a method of filtering an address, according to one exemplary embodiment of the present invention. In the present embodiment, the method of filtering an address being used in the electronic device installed with the webpage browser client terminal is explained. The method of filtering an address may include the following steps.

In step 201, a URL address corresponding to a material resource of a webpage (webpage material resource) is acquired, the material resource of the webpage including at least one of a picture resource, an audio resource, a video resource and a literal resource.

In step 202, whether the URL address is stored in an address caching list is searched, the address caching list being for storing URL addresses having been matched by a predefined matching algorithm.

The address caching list includes at least one of a first caching list and a second caching list, wherein the first caching list is used for storing URL addresses which are determined to need filtering by a matching operation according to a predefined matching algorithm, and the second caching list is used for storing URL addresses which are determined not to need filtering by a matching operation according to the predefined matching algorithm.

In step 203, when the URL address is not stored in the address caching list, a matching operation is performed to the URL address according to the predefined matching algorithm to determine whether the URL address is a URL address needing to be filtered.

In summary, in the method of filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

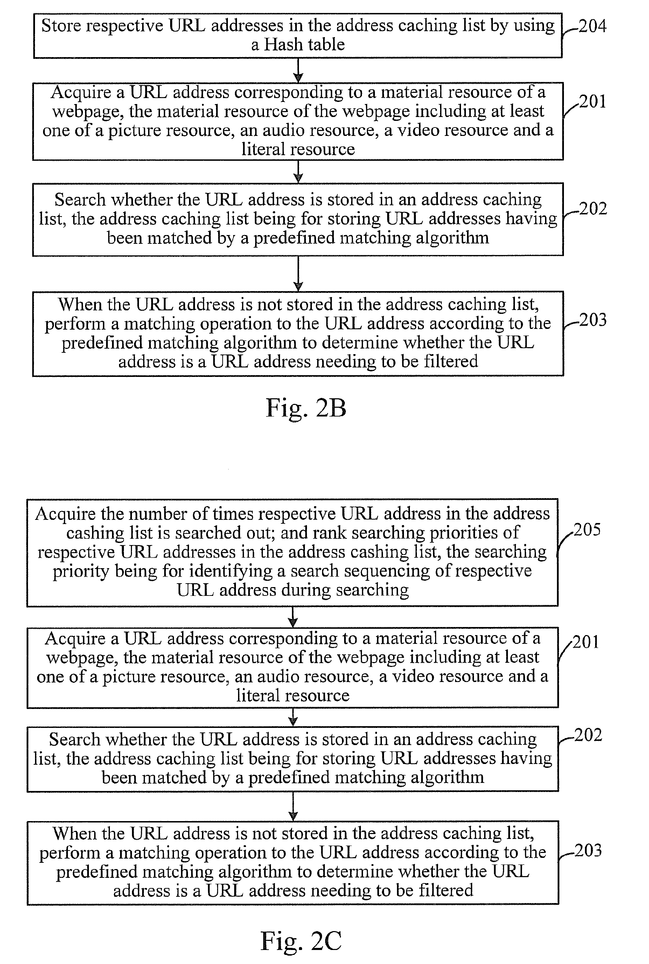

As one possible implementation manner, the client terminal may store respective URL addresses in the address caching list by using a Hash table, so as to improve the efficiency of searching the URL addresses in the address caching list. As shown in Fig. 2B, the method of filtering an address may further include the following steps.

In step 204, respective URL addresses in the address caching list are stored by using a Hash table.

As another possible implementation manner, the client terminal may rank searching priorities of respective URL addresses according to the number of times respective URL address in the address cashing list is searched out, such that the client terminal can search in the address cashing list more quickly when accessing a frequently-accessed webpage, and thus the efficiency of filtering an URL address is improved. As shown in Fig. 2C, the method of filtering an address may further include the following steps.

In step 205, the number of times respective URL address in the address cashing list is searched out is acquired; and searching priorities of respective URL addresses in the address cashing list are ranked according to the number of times, the searching priority being for identifying a search sequencing of respective URL addresses during searching.

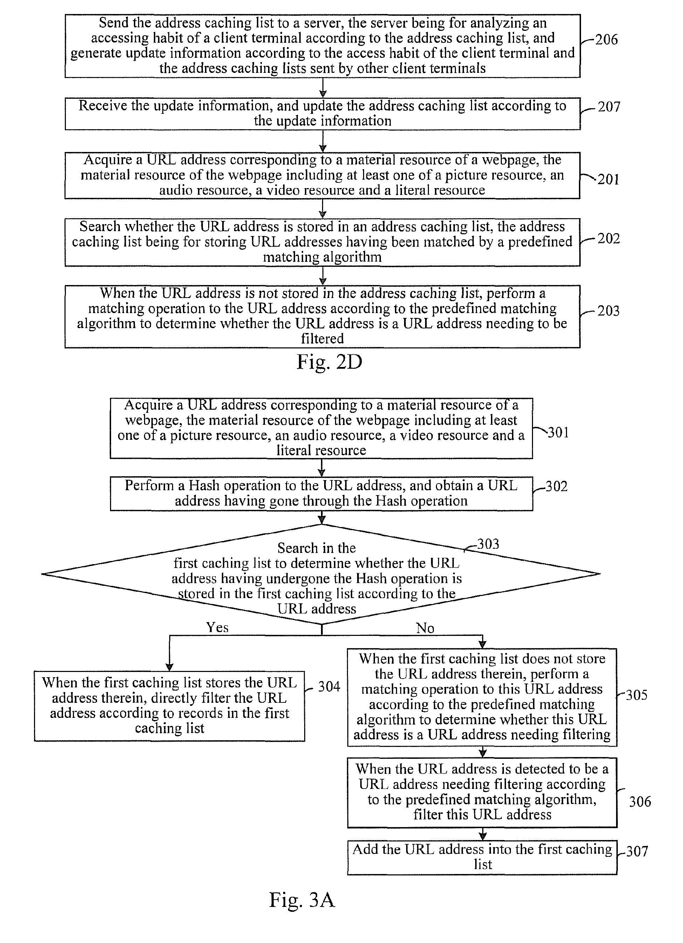

As further another possible implementation manner, the client terminal may also send a generated address caching list to the server, then the server generates update information for different client terminals according to the address caching lists sent by different client terminals; in this way, different client terminals can perfect the URL addresses stored in the address caching list according to the update information, thereby the filtering efficiency is improved. As shown in Fig. 2D, the method of filtering an address may further include the following steps.

In step 206, the address caching lists are sent to a server, the server being for analyzing an accessing habit of the client terminal according to the address caching lists, and generating update information according to the accessing habit of the client terminal and the address caching lists sent by other client terminals.

In step 207, the update information is received, and the address caching lists are updated according to the update information.

When the address caching list includes a first caching list, the client terminal gives priority to searching whether a URL address corresponding to the acquired webpage material resource is stored in the first caching list. When the first caching list does not store this URL address, a matching operation is performed to the URL address by using a predefined matching algorithm. Moreover, in order to improve the filtering efficiency, respective URL addresses in the first caching list are stored by using a Hash table. Hereinafter, one exemplary embodiment is adopted for explanation.

Fig. 3A is a method flow chart of a method of filtering an address, according to another exemplary embodiment of the present invention. In the present embodiment, the method of filtering an address being used in the electronic device 110 shown in Fig. 1 is explained. The method of filtering an address may include the following steps.

In step 301, a URL address corresponding to a material resource of a webpage is acquired, the material resource of the webpage including at least one of a picture resource, an audio resource, a video resource and a literal resource.

The webpage contains lots of webpage material resources therein, and such webpage material resources may be characters, videos, pictures, audios and the like on the webpage. However, these webpage material resources contain some advertising resources, and displaying these advertising resources on the webpage will affect the browsing experience of the user, therefore, the client terminal needs to filter the advertising resources in the webpage material resources.

Since the URL address corresponding to the advertising resource has a certain identity, the client terminal may acquire the URL address in the webpage material resource, and judge whether the webpage material resource is an advertising resource according to the URL address.

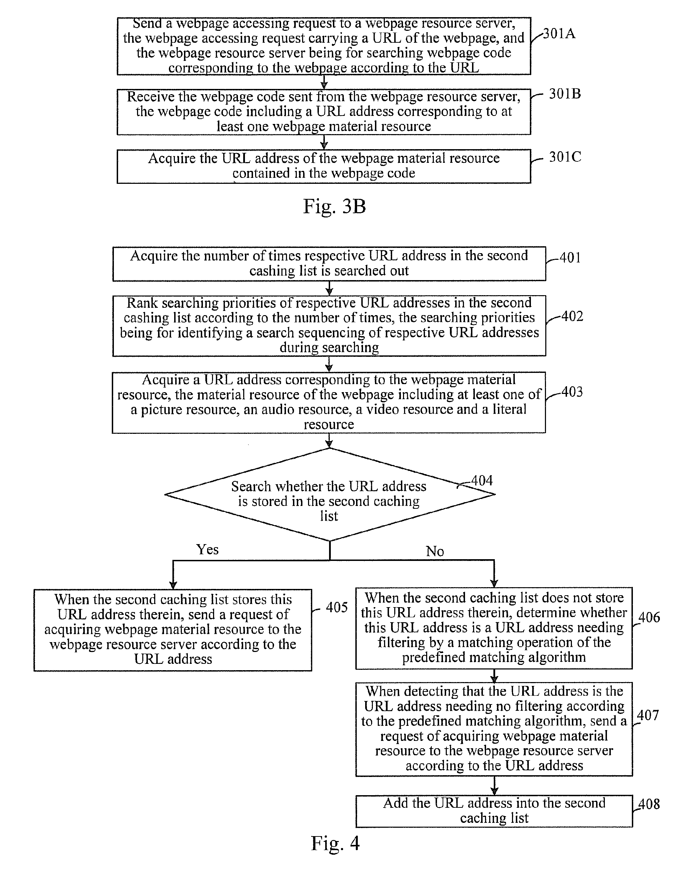

As one possible implementation manner, as shown in Fig. 3B, this step may include the following steps.

In step 301A, a webpage accessing request is sent to a webpage resource server, the webpage accessing request carrying a web address of the webpage, and the webpage resource server being for searching webpage code corresponding to the webpage according to the URL.

The user needs to input corresponding URL in an address field when browsing a webpage via a client terminal, and the client terminal generates a webpage accessing request carrying the URL according to the URL, and sends the webpage accessing request to a corresponding webpage resource server.

The webpage resource server sends the URL with the webpage code of the webpage to the client terminal after receiving the webpage accessing request, wherein the webpage code may be code compiled by a HTML (HyperText Markup language).

In step 301B, the webpage code sent from the webpage resource server is received, the webpage code including a URL address corresponding to at least one webpage material resource.

Since one webpage contains lots of webpage material resources therein, and each webpage material resource has one corresponding URL address, the webpage code contains lots of URL addresses corresponding to the webpage material resources therein.

In step 301C, the URL addresses of the webpage material resources contained in the webpage code are acquired.

The client terminal acquires the URL addresses of the webpage material resources contained in the webpage code one by one, and judge whether the corresponding webpage material resource is an advertising resource according to the address.

In step 302, a Hash operation is performed to the URL address, and then a URL address having undergone the Hash operation is obtained.

Since the URL addresses which are determined to need filtering by a matching operation using the predefined matching algorithm are stored by using a Hash table, i.e., the URL addresses stored in the first caching list have undergone the Hash operation, when searching in the first caching list to find whether the URL address is stored in the first caching list, it is necessary to perform a Hash operation to the URL address. The table structure of the first caching list may be as shown in the following Table 1.

**Table 1**

| Key code value | URL address |
|---|---|
| Hash A | http://example.com/ads/110 |
| Hash B | http://example.com/ads/120 |
| Hash C | http://example.com/ads/130 |

The key code values are obtained after performing the Hash operation to the URL addresses.

After acquiring the URL address in the webpage material resource, the client terminal obtains the key code value corresponding to the URL address via the Hash operation. It should be noted, in the present embodiment, the corresponding key code value being obtained after performing the Hash operation to the URL address is only illustrated, and the present invention is not limited thereto.

In step 303, the first caching list is searched for determining whether the URL address having undergone the Hash operation is stored in the first caching list according to the URL address.

When the URL address having undergone the Hash operation is searched out from the first caching list according to the URL address, step 304 is performed; and when the URL address having undergone the Hash operation is not searched out from the first caching list according to the URL address, step 305 is performed

In step 304, when the first caching list stores the URL address therein, the URL address is directly filtered according to records in the first caching list.

When the first caching list stores the URL address therein, the client terminal may determine that the URL address is an URL address which is determined to need filtering by a matching operation of the predefined matching algorithm, i.e., the webpage material resource corresponding to this URL address is an advertising resource, then the client terminal filters this URL address.

For example, the client terminal performs a Hash operation to the acquired URL address to obtain a key code value "Hash B", and searches in the first caching list shown in Table 1 according to the key code value to find that this key code value exists in the first caching list, i.e., the first caching list stores this URL address therein. At this time, the client terminal does not need to perform a matching operation to this URL address according to the predefined matching algorithm; instead, the client terminal may directly filter this URL address.

In step 305, when the first caching list does not store the URL address therein, a matching operation is performed to this URL address according to the predefined matching algorithm to determine whether this URL address is a URL address needing filtering.

When the first caching list does not store the URL address therein, the client terminal cannot determine whether the URL address is a URL address needing filtering or not, so the client terminal needs to perform a matching operation to this URL address according to the predefined matching algorithm.

The client terminal builds a filter matching table according to the predefined matching algorithm. The filter matching table stores therein at least one regular expression. The client terminal matches the acquired URL address with the regular expression in the filter matching table. When the URL address matches with the regular expression in the filter matching table, it is determined that this URL address is a URL address needing to be filtered, then step 306 is performed. The filter matching table may be as shown in the following Table 2.

**Table 2**

| Number | Regular Expression |
|---|---|
| 1 | http://example.com/ads/* |
| 2 | http://example.com/adv/* |
| 3 | http://example.com/banner*.gif |

For instance, the acquired URL address is http://example.com/adv/123. After matching this URL address with the regular expression in the filter matching table, it is found that this URL address matches with the regular expression of Number 2, thereby this URL address is determined to be a URL address needing to be filtered.

In step 306, when the URL address is detected to be a URL address needing filtering according to the predefined matching algorithm, this URL address is filtered.

When the URL address is detected to be a URL address needing to be filtered according to the predefined matching algorithm, the client terminal determines that the webpage material resource is an advertising resource and filters the URL address.

In step 307, the URL address is added into the first caching list.

Since the URL address is determined to be a URL address needing filtering by a matching operation of the predefined matching algorithm, the client terminal adds the URL address into the first caching list. It should be noted, since respective URL addresses in the first caching list are stored by using the Hash table, the client terminal needs to perform the hash operation to the URL address at first, then store the URL address into the first caching list.

When the client terminal acquires the URL address again, since the first caching list has stored the URL address, the client terminal may directly filter the URL address without performing a matching operation via the predefined matching algorithm, thereby the calculating resource is saved.

In summary, in the method of filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

Moreover, in the method of filtering an address provided by the present exemplary embodiment, by storing the URL address, which is determined to need filtering by the matching operation of predefined matching algorithm, in the first caching list, when the first caching list stores this URL address therein, filtering this URL address directly, and when the first caching list does not store this URL address therein, performing a matching operation via the predefined matching algorithm, the process of matching the URL address via the algorithm is reduced, the calculating resource is saved, and the filtering efficiency is improved.

Moreover, in the method of filtering an address provided by the present exemplary embodiment, by storing the respective URL addresses in the address caching list by using the Hash table, the search efficiency in the address caching list by the client terminal is improved, and thereby the filtering efficiency is improved.

When the address caching list includes a second caching list, the client terminal searches whether the second caching list stores a URL address corresponding to the acquired webpage material resource therein preferentially. When the second caching list does not store this URL address, a matching operation is performed to the URL address by using a predefined matching algorithm. Moreover, in order to improve the filtering efficiency, the client terminal may also rank searching priorities of respective URL addresses according to the number of times respective URL addresses in the second cashing list are searched out. Hereinafter, one exemplary embodiment is adopted for explanation.

Fig. 4 is a method flow chart of a method of filtering an address, according to further another exemplary embodiment of the present invention. In the present embodiment, the method of filtering an address being used in the electronic device 110 shown in Fig. 1 is explained. The method of filtering an address may include the following steps.

In step 401, the number of times a respective URL address in the second cashing list is searched out is acquired.

The second cashing list is for storing the URL addresses which are determined not to need filtering by the matching of the predefined matching algorithm. Once the URL address in the second caching list is searched out, the client terminal adds 1 to the searched place corresponding to the URL address. Apparently, the more the number of times the URL address is searched out, the more the number of times the user acquires the webpage material resource corresponding to this URL address. Thereby, the client terminal may determine the number of times the user acquires the corresponding webpage material resource according to the number of times the URL address is searched out.

In step 402, searching priorities of respective URL addresses in the second cashing list are ranked according to the number of times. The searching priorities are for identifying a search sequencing of respective URL addresses during searching.

The client terminal ranks searching priorities of respective URL addresses stored in the second cashing list according to the number of times the acquired respective URL addresses are searched out. The second cashing list may be as shown in Table 3.

**Table 3**

| Searching Priorities | URL Addresses | the number of being searched out |
|---|---|---|
| 4 | URL A | 100 |
| 3 | URL B | 80 |
| 2 | URL C | 60 |
| 1 | URL D | 20 |

When searching a URL address in the second caching list, the client terminal performs searching sequentially according to the search priorities from the largest to the smallest. It should be noted, different URL addresses may correspond to the same search priority. In the present embodiment, different URL addresses being corresponding to different search priorities is illustrated, the present invention is not limited thereto.

It is apparent that for the webpages which are frequently accessed by the client terminal, the URL addresses corresponding to the webpage material resources contained in these webpages have relatively high search priorities. When the user accesses these frequently accessed webpages, the searching efficiency in the second caching list is relatively high, thereby the efficiency of acquiring the webpage resources is improved.

In step 403, a URL address corresponding to a material resource of a webpage is acquired, the material resource of the webpage including at least one of a picture resource, an audio resource, a video resource and a literal resource.

Similar to the above step 301, the client terminal acquires a URL address corresponding to a material resource of a webpage and judges whether the material resource of the webpage is an advertising resource according to the URL address.

In step 404, whether the URL address is stored in the second caching list is searched.

The client terminal acquires the search priorities of respective URLs in the second caching list, compares the URL address to respective URL addresses in the second cashing list according to the sequence of the search priorities from the largest to the smallest, so as to determine whether the second caching list stores this URL address therein.

When the second caching list stores this URL address therein, step 405 is performed; and when the second caching list does not store this URL address therein, step 406 is performed.

In step 405, when the second caching list stores this URL address therein, a request of acquiring a webpage material resource is sent to a webpage resource server according to the URL address.

When the second caching list stores this URL address therein, it can be determined that the URL address is a URL address which needs no filtering, then the client terminal generates a request of acquiring a webpage material resource according to this URL address, and send the request of acquiring a webpage material resource to the webpage resource server.

In step 406, when the second caching list does not store this URL address therein, whether this URL address is a URL address needing filtering is determined by a matching operation using the predefined matching algorithm.

When the second caching list does not store this URL address therein, the client terminal cannot determine whether this URL address is a URL address needing filtering or not, thereby it is necessary to further perform a matching operation to the URL address according to the predefined matching algorithm. The step of matching the URL address according to the predefined matching algorithm is similar to the above step 305, which is not elaborated herein.

In step 407, when detecting that the URL address is a URL address needing no filtering according to the predefined matching algorithm, a request of acquiring a webpage material resource is sent to the webpage resource server according to the URL address.

When detecting that the URL address is a URL address needing no filtering according to the predefined matching algorithm, the client terminal determines that the webpage material resource is not an advertising resource, and sends a request of acquiring a webpage material resource to the webpage resource server. Accordingly, the webpage resource server returns a corresponding webpage material resource according to the request of acquiring a webpage material resource.

In step 408, the URL address is added into the second caching list.

Since the URL address is a URL address which is determined to need no filtering by the matching of the predefined matching algorithm, the client terminal adds the URL address into the second caching list. It should be noted, after adding the URL address into the second caching list, the client terminal needs to detect whether the search priorities need to change, and make adjustments when the search priorities change, so as to ensure the timeliness of the search priorities in the second caching list.

When the client terminal acquires this URL address again, since the second caching list has already stored this URL address, the client terminal needs not to match the URL address by using the predefined matching algorithm, such that the calculating resource is saved.

In summary, in the method of filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

Moreover, in the method of filtering an address provided by the present exemplary embodiment, by storing the URL address, which is determined to need no filtering by the matching operation of predefined matching algorithm, in the second caching list, and searching in the second caching list whether the second caching list stores the URL address corresponding to the webpage material resource therein, when the second caching list stores this URL address therein, sending a request of acquiring a webpage material resource to the webpage resource server, and when the second caching list does not store this URL address therein, performing a matching operation via the predefined matching algorithm, thereby the process of matching the URL address via the algorithm is reduced, the calculating resource is saved, and the filtering efficiency is improved.

Moreover, in the method of filtering an address provided by the present exemplary embodiment, by ranking searching priorities of respective URL addresses according to the number of times respective URL addresses in the address cashing list are searched out, the search efficiency in the address caching list by the client terminal is improved, thereby the filtering efficiency is improved.

The client terminal may also store the URL address, which is determined to need filtering by the matching operation, in the first caching list, and store the URL address, which is determined to need no filtering by the matching operation, in the second caching list. When acquiring a URL address, the client terminal searches in the first and second caching lists sequentially, and when both the first and second caching lists store the URL address, the client terminal performs a matching operation by a predefined matching algorithm. Moreover, in order to improve the filtering efficiency, the client terminal sends the address caching list to the server, and the server generates update information according to the accessing habit of the client terminal and the address caching lists sent by other client terminals, and sends the update information to the client terminal, such that the address caching lists can be further supplemented, and the filtering efficiency is further improved. Hereinafter, one exemplary embodiment is adopted for explanation.

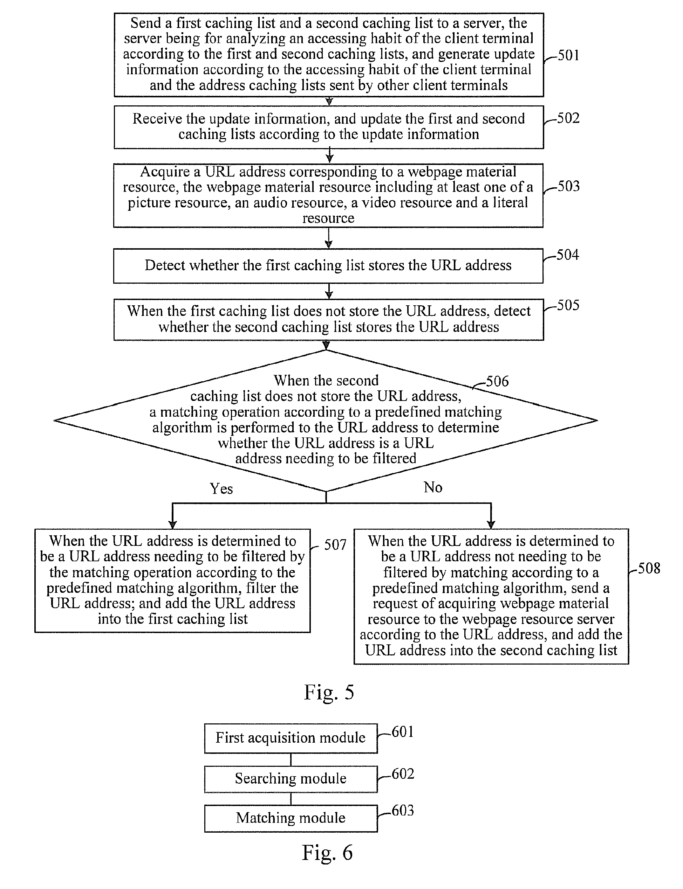

Fig. 5 is a method flow chart of a method of filtering an address, according to further still exemplary embodiment of the present invention. In the present embodiment, the method of filtering an address being used in the electronic device 110 shown in Fig. 1 is explained. The method of filtering an address may include the following steps.

In step 501, a first caching list and a second caching list are sent to a server, the server being for analyzing an accessing habit of the client terminal according to the first and second caching lists, and generating update information according to the accessing habit of the client terminal and the address caching lists sent by other client terminals.

The client terminal may send the first and second caching lists to the server every predetermined time interval, and the predetermined time interval may be the same or different. For instance, the client terminal may send the first and second caching lists to the server every 24 hours, or may send the first and second caching lists to the server on the very first day of every month. It should be noted, the client terminal may also send the first and second caching lists to the server when detecting that a new URL address is added in the first or second caching list. The present invention is not limited thereto.

After receiving the first and second caching lists, the server analyzes an accessing habit of the client terminal according to the URL addresses stored in the first and second caching lists. For example, the server may analyze the stored URL addresses and obtain the website frequently accessed by the client terminal.

Since the server receives the first and second caching lists sent by other client terminals at the same time, the server may generate update information according to the accessing habit of the client terminal and the URL addresses stored in the first and second caching lists sent by other client terminals.

For instance, the server analyzes the first caching list A sent by the client terminal A and obtains that the website frequently accessed by the client terminal A is a website A, and both "URL A" and "URL B" in the first caching list A belong to the website A; the server analyzes the first caching list B sent by the client terminal B and obtains that the website frequently accessed by the client terminal B is the website A, and both "URL B" and "URL C" in the first caching list A belong to the website A; the server determines "URL C" to be update information corresponding to the client terminal A, and determines "URL A" to be update information corresponding to the client terminal B.

The server sends the generated update information to a corresponding client terminal.

In step 502, the update information is received, and the first and second caching lists are updated according to the update information.

The client terminal adds a URL address contained in the update information into a corresponding address caching list.

In step 503, a URL address corresponding to a webpage material resource is acquired, the webpage material resource including at least one of a picture resource, an audio resource, a video resource and a literal resource.

Similar to the above step 301, a URL address corresponding to a material resource of a webpage is acquired, and whether the webpage material resource is an advertising resource is judged according to the URL address.

In step 504, whether the first caching list stores the URL address is detected.

The client terminal detects whether the first caching list stores the URL address, when detecting that the first caching list stores the URL address, it is determined that the URL address is a URL address needing to be filtered, then the URL address is filtered; and when the first caching list does not store the URL address, step 505 is performed.

In step 505, when the first caching list does not store the URL address, whether the second caching list stores the URL address is detected.

The client terminal detects whether the second caching list stores the URL address, when detecting that the second caching list stores the URL address, it is determined that the URL address is a URL address not needing to be filtered; and when the second caching list does not store the URL address, step 506 is performed.

In step 506, when the second caching list does not store the URL address, a matching operation according to a predefined matching algorithm is performed to the URL address to determine whether the URL address is a URL address needing to be filtered.

The step of performing a matching operation to the URL address according to a predefined matching algorithm so as to determine whether the URL address is a URL address needing to be filtered is similar to the above step 305, which is not elaborated herein.

In step 507, when the URL address is determined to be a URL address needing to be filtered by matching according to a predefined matching algorithm, the URL address is filtered; and the URL address is added into the first caching list.

When the URL address is determined to be a URL address needing to be filtered by matching according to a predefined matching algorithm, the client terminal may determine that the webpage material resource is an advertising resource, filter the URL address, and add the URL address into the first caching list.

In step 508, when the URL address is determined to be a URL address not needing to be filtered by matching according to a predefined matching algorithm, a request of acquiring a webpage material resource is sent to the webpage resource server according to the URL address, and the URL address is added into the second caching list.

When the URL address is determined to be a URL address not needing to be filtered by matching according to a predefined matching algorithm, the client terminal may determine that the webpage material resource is not an advertising resource, send a request of acquiring a webpage material resource to the webpage resource server, and add the URL address into the second caching list.

In summary, in the method of filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

Moreover, in the method of filtering an address provided by the present exemplary embodiment, the address caching list is sent to the server, and the server generates update information according to the address caching list and the address caching lists sent by other client terminals, and sends the update information to the client terminal, then the client terminal updates the address caching list according to the update information, such that the address caching lists of the client terminals having the same accessing habit can be further supplemented, thereby the filtering efficiency is further improved.

Embodiments of devices of the present invention are described hereinafter, which may be used for performing embodiments of methods of the present invention. For the details not described in the embodiments of devices of the present invention, please refer to the embodiments of methods of the present invention.

Fig. 6 is a structural block diagram of a device for filtering an address, according to one exemplary embodiment of the present invention. The device for filtering an address may be implemented to be a part or whole of the electronic device 110 shown in Fig. 1 by software, hardware or a combination of them. The device for filtering an address may include a first acquisition module 601, a searching module 602 and a matching module 603.

The first acquisition module 601 is configured to acquire a URL address corresponding to a material resource of a webpage, the material resource of the webpage including at least one of a picture resource, an audio resource, a video resource and a literal resource.

The searching module 602 is configured to search whether the URL address is stored in an address caching list, the address caching list being for storing URL addresses having been matched by a predefined matching algorithm.

The matching module 603 is configured to, when the URL address is not stored in the address caching list, perform a matching operation to the URL address according to the predefined matching algorithm to determine whether the URL address is a URL address needing to be filtered.

In summary, in the device for filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

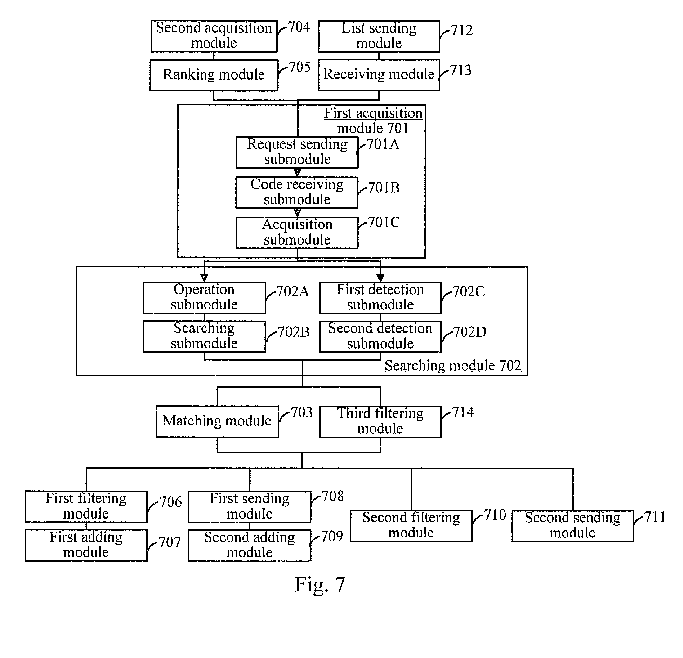

Fig. 7 is a structural block diagram of a device for filtering an address, according to another exemplary embodiment of the present invention. The device for filtering an address may be implemented to be a part or whole of the electronic device 110 shown in Fig. 1 by software, hardware or a combination of them. The device for filtering an address may include a first acquisition module 701, a searching module 702 and a matching module 703.

The first acquisition module 701 is configured to acquire a URL address corresponding to a material resource of a webpage, the material resource of the webpage including at least one of a picture resource, an audio resource, a video resource and a literal resource.

The searching module 702 is configured to search whether the URL address is stored in an address caching list, the address caching list being for storing URL addresses having been matched by a predefined matching algorithm.

The matching module 703 is configured to, when the URL address is not stored in the address caching list, perform a matching operation to the URL address according to the predefined matching algorithm to determine whether the URL address is a URL address needing to be filtered.

Optionally, the first acquisition module 701 includes a request sending submodule 701A, a code receiving submodule 701B, and an acquisition submodule 701C.

The request sending submodule 701A is configured to send a webpage accessing request to a webpage resource server, the webpage accessing request carrying a web address of the webpage, and the webpage resource server being for searching webpage code corresponding to the webpage according to the web address.

The code receiving submodule 701B is configured to receive the webpage code sent by the webpage resource server, the webpage code including a URL address corresponding to at least one webpage material resource.

The acquisition submodule 701C is configured to acquire the URL address of the webpage material resource contained in the webpage code.

Optionally, respective URL addresses in the address caching list are stored by using a Hash table.

The searching module 702 includes:
an operation submodule 702A configured to perform a Hash operation to the URL address, and obtain a URL address having gone through the Hash operation; and
a searching submodule 702B configured to search in the address caching list for determining whether the URL address having undergone the Hash operation is stored in the address caching list according to the URL address.

Optionally, the device further includes:
a second acquisition module 704 configured to acquire the number of times respective URL address in the address cashing list is searched out; and
a ranking module 705 configured to rank searching priorities of respective URL addresses in the address cashing list according to the number of times, the searching priority being for identifying a search sequencing of respective URL addresses during searching.

Optionally, the address caching list includes a first caching list for storing addresses which are determined to need filtering by a matching operation according to a predefined matching algorithm.

The device for filtering further includes:
a first filtering module 706 configured to, when the URL address is detected to be a URL address needing filtering by a matching operation according to a predefined matching algorithm, filter the URL address; and
a first adding module 707 configured to add the URL address into the first caching list.

Optionally, the address caching list includes a second caching list for storing addresses which are determined not to need filtering by a matching operation according to a predefined matching algorithm.

The device for filtering further includes:
a first sending module 708 configured to, when the URL address is detected to be a URL address not needing filtering by a matching operation according to a predefined matching algorithm, send a request of acquiring a webpage material resource to the webpage resource server according to the URL address; and
a second adding module 709 configured to add the URL address into the second caching list.

Optionally, the address caching list includes a first caching list for storing addresses which are determined to need filtering by a matching operation according to a predefined matching algorithm, and a second caching list for storing addresses which are determined not to need filtering by a matching operation according to a predefined matching algorithm.

The searching module 702 includes:
a first detection submodule 702C configured to detect whether the first caching list stores the URL address; and
a second detection submodule 702D configured to, when the first caching list does not store the URL address, detect whether the second caching list stores the URL address;
the second detection submodule 702D is also configured to, when the second caching list does not store the URL address, perform the step of matching and determining whether the URL address is a URL address needing filtering according to a predefined matching algorithm.

The device for filtering further includes:
a second filtering module 710 configured to, when the URL address is matched and determined to be a URL address needing to be filtered according to the predefined matching algorithm, filter the URL address; and add the URL address into the first caching list; and
a second sending module 711 configured to, when the URL address is matched and determined to be a URL address not needing to be filtered according to the predefined matching algorithm, send a request of acquiring a webpage material resource to the webpage resource server according to the URL address, and add the URL address into the second caching list.

Optionally, the device for filtering further includes:
a list sending module 712 configured to send an address caching list to a server, the server being for analyzing an accessing habit of a client terminal according to the address caching list, and generating update information according to the accessing habit of the client terminal and the address caching lists sent by other client terminals; and
a receiving module 713 configured to receive the update information and update the address caching lists according to the update information.

Optionally, the device for filtering further includes:
a third filtering module 714 configured to, when the address caching list stores the URL address therein, directly filter the URL address according to records in the address caching list; or send a request of acquiring a webpage material resource to a webpage resource server according to the URL address.

In summary, in the device for filtering an address provided by the present exemplary embodiment, by searching whether the acquired URL address is stored in an address caching list, and when the URL address is not stored in the address caching list, performing a matching operation to the URL address according to the predefined matching algorithm to determine whether the URL address is a URL address needing to be filtered, the following problems are solved: when receiving the same two URL addresses, it is necessary to perform the same two matching operations by using the predefined matching algorithm, which not only affects the filtering efficiency, but also wastes the calculating resource; and the following effects are achieved: the matching operation is only performed to the URL address not stored in the address caching list by using the predefined matching algorithm, thereby the filtering efficiency is improved, and the calculating resource is saved.

Moreover, in the device for filtering an address provided by the present exemplary embodiment, by storing the URL address, which is determined to need filtering by the matching operation of predefined matching algorithm, in the first caching list, when the first caching list stores this URL address therein, filtering this URL address directly, and when the first caching list does not store this URL address therein, performing a matching operation via the predefined matching algorithm, the process of matching the URL address via the algorithm is reduced, the calculating resource is saved, and the filtering efficiency is improved.

Moreover, in the device for filtering an address provided by the present exemplary embodiment, by storing the respective URL addresses in the address caching list by using the Hash table, the search efficiency in the address caching list by the client terminal is improved, and thereby the filtering efficiency is improved.

Moreover, in the device for filtering an address provided by the present exemplary embodiment, by storing the URL address, which is determined to need no filtering by the matching operation of predefined matching algorithm, in the second caching list, and searching in the second caching list whether the second caching list stores the URL address corresponding to the webpage material resource therein, when the second caching list stores this URL address therein, sending a request of acquiring a webpage material resource to the webpage resource server, and when the second caching list does not store this URL address therein, performing a matching operation via the predefined matching algorithm, thereby the process of matching the URL address via the algorithm is reduced, the calculating resource is saved, and the filtering efficiency is improved.

Moreover, in the device for filtering an address provided by the present exemplary embodiment, by ranking searching priorities of respective URL addresses according to the number of times respective URL addresses in the address cashing list are searched out, the search efficiency in the address caching list by the client terminal is improved, thereby the filtering efficiency is improved.

Moreover, in the device for filtering an address provided by the present exemplary embodiment, the address caching list is sent to the server, and the server generates update information according to the address caching list and the address caching lists sent by other client terminals, and sends the update information to the client terminal, then the client terminal updates the address caching list according to the update information, such that the address caching lists of the client terminals having the same accessing habit can be further supplemented, thereby the filtering efficiency is further improved.

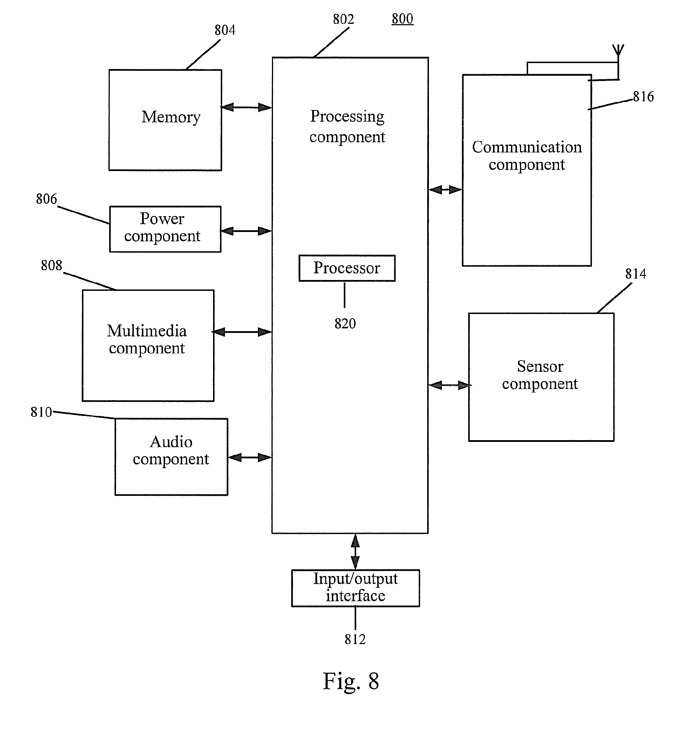

Fig. 8 is a block diagram of a device for filtering an address 800, according to one exemplary embodiment of the present invention. For example, the device 800 may be the electronic device 110 shown in Fig. 1.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When the instructions in the storage medium are performed by the controller of the device 800, the device 800 can perform the method of filtering an address in the electronic device 110 shown in Fig. 1.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method of filtering an address comprising:
acquiring (201, 301, 403, 503) a Uniform Resource Locator (URL) address corresponding to a material resource of a webpage, the material resource of the webpage including at least one of a picture resource, an audio resource, a video resource and a literal resource;
searching (202) whether the URL address is stored in an address caching list, the address caching list being for storing URL addresses having been matched by a predefined matching algorithm; and
if the URL address is not stored in the address caching list, performing (203) a matching operation to the URL address according to the predefined matching algorithm to determine whether the URL address is a URL address needing filtering.

2. The method according to claim 1, wherein acquiring (201, 301, 403, 503) the URL address corresponding to the material resource of the webpage comprises:
sending (301A) a webpage accessing request to a webpage resource server, the webpage accessing request carrying a web address of the webpage, and the webpage resource server being for searching webpage code corresponding to the webpage according to the web address;
receiving (301B) the webpage code sent by the webpage resource server, the webpage code including a URL address corresponding to at least one webpage material resource; and
acquiring (301C) the URL address of the webpage material resource contained in the webpage code.

3. The method according to claim 1 or 2, wherein URL addresses in the address caching list are stored by using a Hash table (204) and
searching (202) whether the URL address is stored in the address caching list comprises:
performing (302) a Hash operation to the URL address, and obtaining a URL address having undergone the Hash operation; and
searching (303) in the address caching list for determining whether the URL address having undergone the Hash operation is stored in the address caching list according to the URL address.

4. The method according to claim 1 further comprising:
acquiring (205) the numbers of times respective URL addresses in the address cashing list are searched out; and
ranking searching priorities of respective URL addresses in the address cashing list according to the numbers of times, the searching priority being for identifying a search sequencing of individual URL address during searching.

5. The method according to any of claims 1 to 4, wherein the address caching list comprises a first caching list for storing URL addresses which are determined to need filtering by the matching operation according to the predefined matching algorithm,
the method further comprising:
if the URL address is detected to be a URL address needing filtering according to the predefined matching algorithm, filtering (306) this URL address; and
adding (307) this URL address into the first caching list.

6. The method according to any of claims 1 to 4, wherein the address caching list comprises a second caching list for storing URL addresses which are determined to need no filtering by the matching operation according to the predefined matching algorithm,
the method further comprising:
if the URL address is detected to be a URL address needing no filtering according to the predefined matching algorithm, sending (407) a request of acquiring a webpage material resource to a webpage resource server according to the URL address; and
adding (408) this URL address into the second caching list.

7. The method according to any of claims 1 to 4, wherein:
the address caching list comprises a first caching list for storing URL addresses which are determined to need filtering by the matching operation according to the predefined matching algorithm, and a second caching list for storing URL addresses which are determined to need no filtering by the matching operation according to the predefined matching algorithm,
searching (201) whether the URL address is stored in the address caching list comprises:
detecting (504) whether the URL address is stored in the first caching list;
if the URL address is not stored in the first caching list, detecting (505) whether the URL address is stored in the second caching list; and
if the URL address is not stored in the second caching list, performing (506) the matching operation to the URL address according to the predefined matching algorithm to determine whether the URL address is a URL address needing filtering, and
the method further comprises:
if the URL address is determined to be a URL address needing filtering by the matching operation according to the predefined matching algorithm, filtering (507) the URL address, and adding the URL address into the first caching list; and
if the URL address is determined to be a URL address needing no filtering by the matching operation according to the predefined matching algorithm, sending (508) a request of acquiring a webpage material resource to the webpage resource server according to the URL address, and adding the URL address into the second caching list.

8. The method according to any one of claims 5-7, further comprising:
sending (206) the address caching list to a server, the server being for analyzing an accessing habit of a client terminal according to the address caching list, and generating update information according to the accessing habit of the client terminal and the address caching lists sent by other client terminals; and
receiving (207) the update information, and updating the address caching list according to the update information.

9. The method according to any one of claims 1-7 further comprising:
if the address caching list stores the URL address therein, directly filtering the URL address according to records in the address caching list; or sending a request of acquiring a webpage material resource to a webpage resource server according to the URL address.

10. A device for filtering an address comprising:
a first acquisition module (601, 701) configured to acquire a URL address corresponding to a material resource of a webpage, the material resource of the webpage including at least one of a picture resource, an audio resource, a video resource and a literal resource;
a search module (602, 702) configured to search whether the URL address is stored in an address caching list, the address caching list being for storing URL addresses having been matched by a predefined matching algorithm; and
a matching module (603) configured to, if the URL address is not stored in the address caching list, perform a matching operation to the URL address according to the predefined matching algorithm to determine whether the URL address is a URL address needing filtering.

11. The device according to claim 10, wherein the first acquisition module (601, 701) comprises:
a request sending submodule (701A) configured to send a webpage accessing request to a webpage resource server, the webpage accessing request carrying a web address of the webpage, and the webpage resource server being for searching webpage code corresponding to the webpage according to the web address;
a code receiving submodule (701B) configured to receive the webpage code sent by the webpage resource server, the webpage code including a URL address corresponding to at least one webpage material resource; and
an acquisition submodule (701C) configured to acquire the URL address of the webpage material resource contained in the webpage code.

12. The device according to claim 10 or 11, wherein URL addresses in the address caching list are stored by using a Hash table; and
the search module (602, 702) comprises:
an operation submodule (702A) configured to perform a Hash operation to the URL address, and obtain a URL address having undergone the Hash operation; and
a searching submodule (702B) configured to search in the address caching list for determining whether the URL address having undergone the Hash operation is stored in the address caching list according to the URL address.

13. The device according to any of claims 10-12 further comprising:
a second acquisition module (704) configured to acquire the numbers of times respective URL addresses in the address cashing list are searched out; and
a ranking module (705) configured to rank searching priorities of respective URL addresses in the address cashing list according to the numbers of times, the searching priority being for identifying a search sequencing of individual URL address during searching.

14. The device according to any of claims 10-13 wherein:
the address caching list comprises a first caching list for storing URL addresses which are determined to need filtering by the matching operation according to the predefined matching algorithm,
and the device further comprises:
a first filtering module (706) configured to, if the URL address is detected to be a URL address needing filtering by the matching operation according to the predefined matching algorithm, filter this URL address; and
a first adding module (707) configured to add this URL address into the first caching list.

15. A computer program, which when executed on a processor of an electronic device, performs a method according to any one of claims 1 to 9.
